# EUROPEAN PATENT SPECIFICATION

(11) **EP 0 824 581 B1**
(45) Date of publication and mention of the grant of the patent: **13.12.2000**
(21) Application number: 96912034.4
(22) Date of filing: 22.04.1996
(51) Int. Cl.: C11D 13/18, B29C 33/00

(54) **SOAP MAKING PROCESS**
FORMEN VON SEIFENSTÜCKEN
FABRICATION DE PAINS DE SAVON

(30) Priority: 12.05.1995 US 439732; 22.01.1996 US 589228
(43) Date of publication of application: 25.02.1998
(73) Proprietor: UNILEVER PLC, London EC4P 4BQ (GB); UNILEVER N.V., 3013 AL Rotterdam (NL)
(72) Inventor: HEINZ, Daniel, John, Joppa, MD 21085 (US); BUZZEO, Pasquale, Michael, Westminster, MD 21157 (US)
(74) Representative: Elliott, Peter William
(86) International application number: EP9601705
(87) International publication number: WO9635773

(56) References cited:
- WO-A-88/07573
- DE-A- 1 617 262
- FR-A- 2 276 379
- FR-A- 2 565 247
- GB-A- 1 325 561
- GB-A- 2 023 057
- US-A- 3 899 566
- US-A- 4 043 234
- US-A- 4 473 522
- US-A- 4 790 223

## Description

### Field of the Invention

The present invention relates to the "so-called" die blocks which are used in the bar stamping process, i.e., the process in which soap and/or detergent bars are stamped from extruded billets of material. More particularly, it relates to a method for reducing the amount of rework during the process of stamping soap or detergent bars.

Although it is usually the number of cavities (which are usually identical in terms of their size and shape) which fit on a given die block which applicants refer to as "capacity", more generally, capacity refers to the overall area on the block which is dedicated to "cavity space" as opposed to "non-cavity space".

### Background of the Invention

Traditionally, soap bars are stamped from extruded billets of material in order to achieve bars of an attractive and uniform appearance. Bar stamping may be accomplished using a pair of opposing die members which are physically brought together (i.e., in a compaction step) to stamp the bars.

Rather than pressing together opposing die members forming a single cavity, the die can be an extended die which has a plurality of cavities thereon. An extended die holding more than one cavity is generally referred to as a "die block" (although in theory a die block may comprise one cavity). The length of a die block is generally fixed by the length of the press against which the die block is mounted. Since, as a practical matter, the press is bought as a standard size piece from a supplier, the length of a conventional press and of a conventional die block are generally fixed.

It has been generally believed that the die cavities on a die block must be molded or machined such that an imaginary line (major axis) crossing across the major axis of the die cavity (generally defining the length of the cavity) should be parallel to the major axis across the die block (defining the length of the die block). Further, it has generally been believed that the ends of two adjoining cavities (defined by the "end" or extremities of the major axis) should have separation distance between them of not less than a specified minimum value. This, of course, increases the total area of die block between the cavities and not defining the cavity space. It further increases the percentage of total die block area devoted to non-cavity space as opposed to cavity space (i.e., decreases capacity of the die block).

The minimum separation distance between the die cavities has been believed to be especially critical because when a billet (a "log" refers to the long extruded pieces after extrusion and before cutting; a billet refers to the pieces after cutting; and a bar refers to the piece after it has been stamped from the billet) of soap which is about to be stamped is placed between the die blocks which define and form the cavities, it has been believed that a certain amount of soap (soap volume of billet) is required to fill out the cavities. If the cavities are too close together, it has been believed that the soap cavities would not fill up and that the bars thus made would be imperfect.

Indeed, a typical specification sheet from Binacchi and Company, i.e., a company which makes conventional soap presses used in bar stamping which refers to "A" and "B" where "A" is the spacing between bars and "B" the width of the bar at the edges, i.e., width of the cavity at the extremity of the major axis (this can be a single point, for example, if the bar is an ellipse) states as B gets greater, (i.e., from B = 0 to B = 0 to 8 to B = 8 to 15 etc.), the spacing between die cavities A must also be made greater.

Thus, there is a clear teaching away from moving the spacing together by the manufacturer of the industry used press. In turn, this means that more of the die block defines an area between cavities, and less of the die block defines the cavity area itself. Again, this by definition results in less capacity, where capacity is the area used for cavity space, not area of non-cavity space (such as the spacing between cavities).

While spacing cavities further apart has been desirable to ensure die cavities are completely filled, the additional area between cavities (reduced capacity) also means that there will be additional rework (i.e., the amount of soap not used to fill the cavities and which must be sent back into the soap plodder to be "reworked" before being recycled once more to the stamping machinery). Rework is also known in the art as "flash".

Any flash or rework which must be sent back to the plodder means that the plodder, which has a limited capacity is fed less soap mixture coming from further upstream into the plodder and this in turn ultimately means the throughput of finished bars is lessened.

Less rework (because of less spacing between ends of cavities) also offers additional advantages. In some formulations, excessive working reduces extrusion and stamping performance. Less rework thus obviously enhances bar extrusion and stamping. Further, less rework may mean lower billet temperatures which can lead to improved stampability. Finally, for striated bars, reduced rework results in improved striation.

Despite the advantages resulting from less rework and despite the fact that moving the cavity ends closer together could result in placing more cavities in a given fixed area (i.e., increased "capacity") or, similarily, the same amount of cavities in a smaller area (i.e. if die blocks of less aspect ratio are used); because the art teaches the disadvantages of reduced spacing between cavity ends (and therefore less total area), die blocks containing such more closely aligned cavity ends are not known.

With regard to angling of the dies (such that major axis across the cavity is not parallel to the major axis of the die block), angled dies have been used to enhance striation of striated bars. However, it has never been previously recognized and, therefore, no one has previously attempted to angle dies for the purpose of:
(1) increasing the number of cavities, preferably identical cavities, per fixed die block length (increasing capacity); or
(2) keeping at least the same, preferably increasing, the number of cavities in a smaller die block length relative to a larger die block which has no angling or closer spacing between cavity ends (in other words, increasing the capacity of cavities identical in size and shape).

Unexpectedly, applicants have found that (1) if the die cavities/bars are angled so that the major axis running across the cavity or bar (generally defining the length of the cavity) is angled away from the major axis of the die block and/or (2) if the area between the cavities is reduced (in fact, area of whole die block is reduced), e.g., by aligning cavities closer together, then it is possible either (1) to increase the number of die cavities (by at least one) compared to a die block of fixed aspect ratio; or (2) Lo maintain the same number of cavities on a die block of reduced aspect ratio; or (3) to increase the number of cavities on a die block of reduced aspect ratio.

### Brief Summary of the Invention

The present invention provides a method for reducing the amount of rework during the process of stamping soap or detergent bars as claimed in Claim 1. Accordingly the invention increases the ratio of the cavity (cavity space area) of a conventional die block to the aspect ratio (ratio of the long surface of the block to the length of the short side) of said die block.

When the total die block area between the cavities, and not defining the cavities themselves is reduced, the amount of soap rework is significantly reduced (i.e., because more of the soap/billets are being stamped into bars). Moreover, applicants have found that the additional cavity (e.g., 5 cavities instead of 4 in the case of examples shown hereinafter) is filled using the same volume of extruded billet. It was particularly surprising to find that the total area of die block not used to define the cavity (for example, by bringing spacing between cavities closer together) can be reduced while still filling the additional cavity using the same volume of soap.

It should be understood that the die blocks may contain more than one row of cavities. It should also be understood that some cavities may be angled while others are not. There can be more than one row of cavities wherein, in each case, for example, the major axis is still parallel to the major axis of the die block. This is particularly useful in the manufacture of small bars or tablets such as are used, for example, in hotels.

The method of the present invention increases the number of cavities in a die block having the same aspect ratio as a conventional die block; or maintains the same number of identical cavities or increases the number of cavities in a die block of reduced aspect ratio by angling the major axis across the cavities at an angle of 1°-90°. (In some embodiments, 10° to 60°, more preferably 20° to 50°) from the major axis across the die block (i.e., length "A") . This may additionally be achieved by reducing the spacing between cavities (and overall area of the entire die block).

The invention relates to a method of reducing rework ("flash") during the process of stamping soap bars, which method comprises using a conventional die block which has been modified by reducing the area between the cavities (e.g., between the edge of one cavity and the next cavity) by angling cavities between 1° and 90°. In some embodiments of the invention, it is preferable to angle the cavities at 10° to 60°, more preferably 20° to 50° from the major axis of the die block. On the other hand, it should be understood that, in some embodiments of the invention, the preferred angling is, for example, 90°.

The cavities may be angled even if no additional cavities are added (i.e., to reduce spacing between "non-cavity" areas and thereby obtain the rework benefits). It should be noted that optimal angle orientation depends on bar shape and, for example, optimal orientation for some bars is 90° while for others it may be 20°-70°. Further, optimal orientation may be either by adding more cavities for given space or reducing the area/rework between cavities.

### BRIEF DESCRIPTION OF THE DRAWINGS

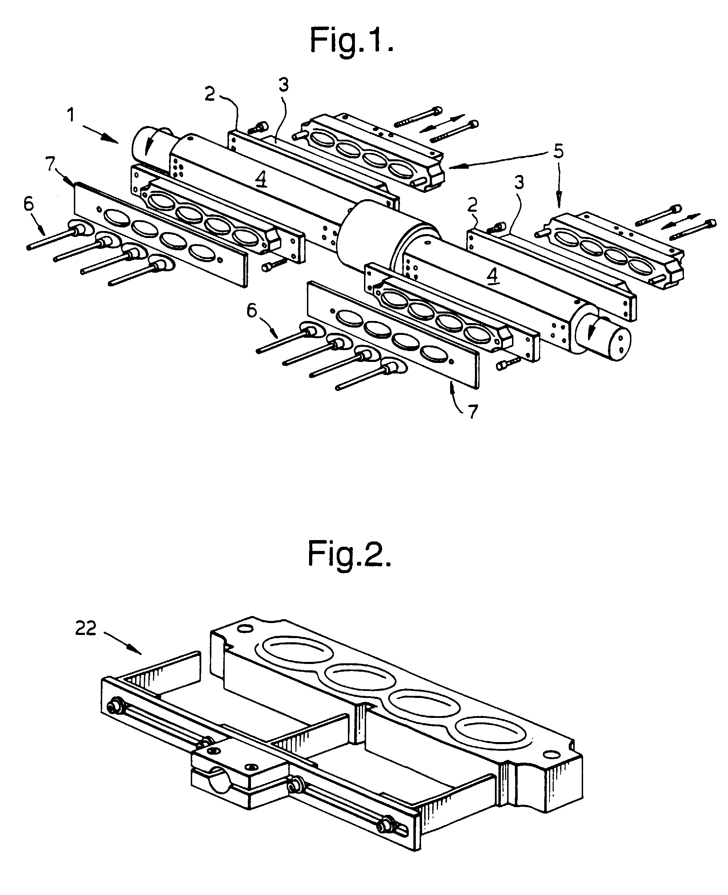

Figure 1 shows a typical operating soap stamping apparatus including the operating positions of the reciprocating and rotary stamping die components of the die block containing the die cavities. The figure shows dies which are currently used having four cavities and having the major axis across the cavities parallel to the major axis across the die plate.

Figure 2 shows a billet elevator which is used to elevate the billet up to between the reciprocating and rotary stamping dies where they will be shaped. Again, this figure depicts the currently used die with the major axis across r.he four (4) die cavities parallel to the major axis across the die block.

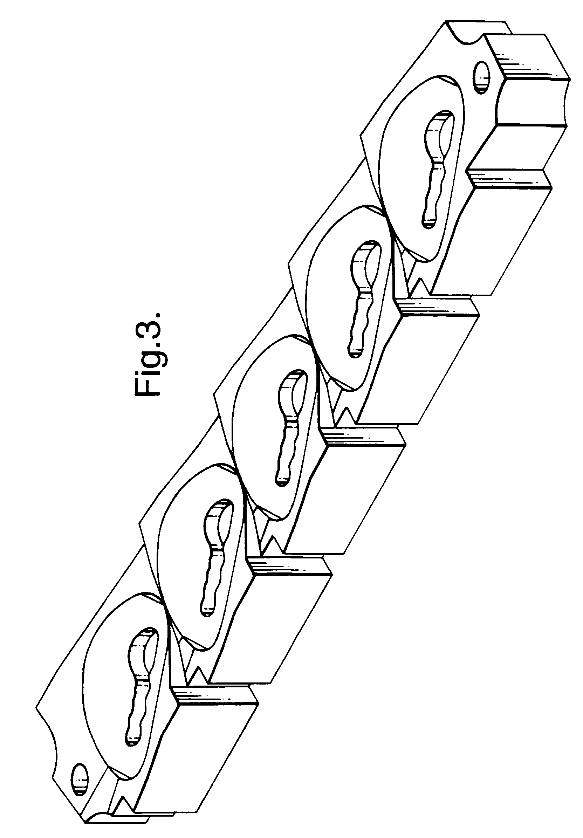

Figure 3 is a view of an angled reciprocating die wherein the major axis across the cavity or bar is angled at 25°-30° from the major axis of the die block. IL can be seen the die now holds five cavities over the same length of die, i.e., a 50.8 cm (20 inch) die (length of die controlled by length of press as available from manufacturer). As noted, the figure shows the reciprocating die half of the die. Soap ejectors have been deleted from this figure.

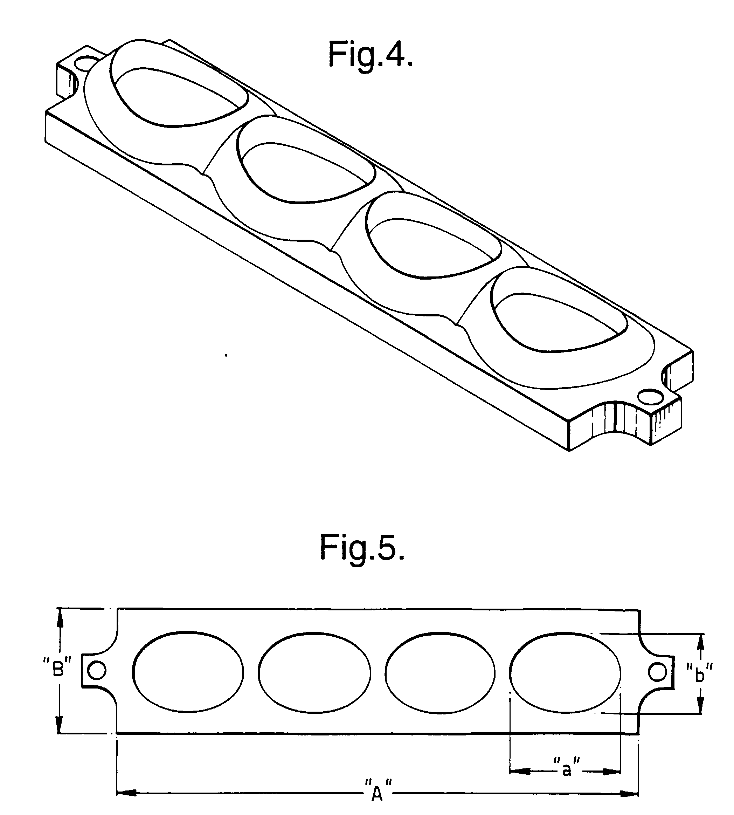

Figure 4 is a view of a conventional rotary die in which the major axis of each cavity is parallel to the major axis of the die block and the separation distance between adjacent cavities is in line with machine manufacturer's teaching.

Figure 5 is a typical die block wherein the aspect ratio is defined as the ratio of the length of the die block, A, to the width B. The aspect ratio of each cavity is defined as the ratio of the length "a" co the length across the cavity "b".

A conventional die is one in which the major axis of the cavity a is parallel to the major axis of the die block A.

### DETAILED DESCRIPTION OF THE INVENTION

The method provides a die blocks in which more cavities are introduced per unit linear lengLh of die block or the same number of cavities are present in a reduced length of die block. Thus, there is an increase in the ratio of capacity (area on block dedicated to "caviLy space") to die block aspect ratio.

In general the surface or stamping area of a die block is generally defined by its aspect ratio. The aspect ratio of the die block is the ratio of the long side of the block (generally the block is rectangular and the long side defines the lengths of the block) to the short side (generally defining the width of the surface area). Thus, the aspecc ratio is A/B as seen in Figure 5.

In a "conventional" die block, the major axis of the cavities machined or molded onto the blocks (defined as "a" in Figure 5) is parallel to the major axis of the block A. Further, the conventional die block will have a fixed number of cavities of defined size and shape as constrained by the following two factors:
(1) the overall length of the block A such that, for a given lengLh "a" of the cavity, only a fixed number of cavities will fit; and
(2) the spacing between the edges of two adjacent cavities. It will be appreciated that as the spacing between adjacent cavities is reduced, the total area of the die block between the cavities (and more generally the total non-cavity area on the entire block) is reduced. During the stamping process, it is this non-cavity defining area which produces the "flash" or rework (soap sent back into the plodder to be "reworked").

In general, it should be noted, that in the art it is believed a defined volume of billet is required co fill out the cavicies during stamping and that, therefore, the total area of non-cavity defining space must be kept at certain minimum level to ensure proper filling of the cavities. Thus, although reduced rework is beneficial for a number of reasons, described below, the art does not appreciate chat this should or could be accomplished by reduction of spacing between cavities.

It is not only unexpectedly realized that there are great benefits to be obtained utilizing a "non-conventional" die block (i.e., with angled dies and less total non-cavity area), but that such dies can be prepared. Contrary to the teachings and beliefs of the art, the spacing between individual cavities can be reduced (the art teaches there is a minimum separation required) and that there is no sacrifice in obtaining solid bars (i.e., the cavities are adequately filled even though there is less non-cavity area because of the cavity angling and/or bringing spacing together).

Specifically, a die block which has the same aspect ratio as a "conventional" die block (i.e., one in which the major axis across the cavities "a" is parallel to the major axis "A" of the die block) but which contains one or more additional cavities (preferably of identical size and shape) than the conventional die block or (2) a die block which has a reduced aspect ratio (ratio of A/B is smaller) than a "conventional" die block, but which contains the same number or more cavities as the conventional die block. In the second definition, applicants are stating that within a die block having a reduced aspect ratio of A/B, it is possible to put the same number or more of identical cavities as in a die block having a larger aspect ratio. Thus, there is an increase in the ratio of capacity to die block aspect ratio.

Adding more cavities to a fixed die block length or the same number or more identical cavities to a smaller die block length means in effect that the ratio of area occupied by the cavity space (capacity) to the die block aspect ratio will be larger. It also means that there will be less rework (since there is less non-cavity area and rework can be defined by the excess soap flashed off the non-cavity area when the soaps billet is stamped or added).

Another way of stating this is that, for a given billet volume, more of the soap is used to fill cavities than is flashed out as rework.

It should be understood that the concept of billet volume cannot be neatly defined. In some cases, slightly more billet volume may be used but, because of additional bar(s) produced, there is an overall proportional gain. Thus, perhaps it is more correct to say that, whether the same billet volume or more or less is used, use of angled dies allows for a reduction of billet volume per tablet (i.e., more tablets made for a given length or volume).

The reduction of rework (there is less unused volume) has significant advantages. The additional rework would normally be sent back to a plodder for reworking.

Since the plodder itself is of limited capacity, the greater the rework, the less the ultimate throughput. Thus, the invention allows more bars to be made and results in tremendous economic advantages.

The placement of at least one more cavity (enhanced capacity) on a die block having the same aspect ratio as a "conventional" die block, or of an equal number (or more) of identical cavities on a die block of smaller aspect ratio can be accomplished by angling the cavities or reducing the "non-cavity" space as discussed above.

Angling of cavities and reduction in spacing do not have to work independently. Indeed, the angling of cavities may itself be responsible for reduction in spacing between cavities (and therefore the reduced total "non-cavity" area). Spacing may be reduced, however, even without angling. In previous art, it has been believed that the spacing between cavities may be from, for example, 7 to 12 millimeters (see Binacchi specifications), while, if using the angled cavities of the present invention, for example, the spacing can be down to 0 millimeters (e.g., where the edge of one cavity is on same tangent as the edge of the second angled cavity) and may certainly be less than 7 mm, e.g., preferably 0 to 6 mm. most preferably 1 to 5 mm. This is a critical distinction over the art which suggests, to the contrary, that as the width of the bar increases, spacing between the bars should be increased. This art is from a manufacturer for soap presses whose equipment is widely used in soap bar industry.

The bars which are stamped according to the subject invention may, for example, be a traditional fatty acid soap bar.

Preferably, however, the bars are non-soap detergent bars. In such bars, soap fatty acid is replaced with milder surfactants such as, for example, sodium cocoyl isethionate (see U.S. Patent No. 2,894,912 to Geitz) or alkyl ether sulfonates. See also U.S. Patent No. 4,695,395 to Caswell.

Referring now to Figure 1, applicants have shown a typical stamping apparatus. Typically, the "press" refers to the long "rolling pin" like piece 1 onto which the rotary stamping half of the die 3 is mounted via the rotary die backplate 2. More particularly, the press is divided into two flat areas 4 onto which the rotary dies 3 are mounted.

The die consists of not only the rotary stamping die 3, but also of the other half of the die, the so called reciprocating die 5. In operation, the reciprocating dies move back and forth during the so-called compaction or pressing step to stamp the billet between the rotary and reciprocating die halves.

After compaction, the rotary die is rotated by 180° so that another rotary die 3 is set to undergo compaction while, at the same time, the bars already stamped are removed by suction cups 6 through a stripper plate 7. The stripper plate removes the soap which does not fill the cavities (which is called "flash") and the flash is recycled into a plodder as discussed above.

The die containing angled die cavities would be used in place of rotary scamping die 3 and reciprocating die 5 and, as noted, size would be constrained by the size of the flat areas 4 on which it is mounted.

Figure 2 refers to what it is known as the billet elevator 22 which is used to elevate the billets for stamping. In the figure, the elevator 22 is designed to nestle into notches found in the reciprocating die 5.

Figures 3 is a figure of the die which has five cavities over the same length where previously there were 4.

These particular cavities are designed to stamp a typical Dove® shaped bar although, it will be understood, the cavities can be cut into various shapes and the shapes are not limited in any way.

It should be noted that the dies can be any die known in the art including those which are chilled by methods known in the art and/or those coated with elastomers (sheets or coated dies).

The invention will now be illustrated by the following nonlimiting examples.

### EXAMPLE 1

A trial of bath dies with 5 angled cavities (as shown in Figure 3) rather than 4 cavities in horizontal orientation was conducted (1) to evaluate bar quality; (2) to measure soap rework reduction; and (3) to determine suitable billet size and shape.

Surprisingly, it was found that billet volume did not have to be increased. The existing billet size and shape was able to fill the die cavities and produce bar quality equal to current high standards.

In addition, with one die, five bars were stamped per machine cycle instead of the current four.

Finally because the same billet volume could be used while reducing the spacing between cavities, a significant reduction in rework was obtained as seen below:

| | Billet wt. | Bars wt. | Rework |
|---|---|---|---|
| Existing dies | 839g | 546g | 35% |
| Angled dies | 839g | 682.5g | 19% |

This represents a tremendous 46% reduction in rework.

Billets were slightly contoured, 5.08 cm (2") high x 3.5 cm (1 ⅜") wide with 3.0 cm (1 ^{3/16}") flats top & bottom x 44.5 cm (17½"), lg. Die gap was 0.008" (0.20mm).

## Claims

1. A method of reducing rework during the process of stamping soap or detergent bars which method comprises reducing the non-cavity area of a conventional die block (3, 5) by angling the major axis across the cavities at an angle of 10° to 90° from the major axis of the die block (3, 5).

2. A method according to Claim 1, wherein the axis across the cavities is angled at 10°-60°.

3. A method according to Claim 2, wherein the axis across the cavities is angled at 20°-50°.

## Patentansprüche

1. Verfahren zur Verringerung des Rücklaufs während des Stanzens von Seifen- oder Detergensriegeln, welches Verfahren umfasst: Verringern der Nicht-Ausnehmungs-Fläche eines herkömmlichen Matrizenblocks (3, 5) durch Anwinkeln der Hauptachse über die Ausnehmungen mit einem Winkel von 10° bis 90° aus der Hauptachse des Matrizenblocks (3, 5).

2. Verfahren nach Anspruch 1, bei welchem die Achse über die Ausnehmungen mit 10°-60° angewinkelt ist.

3. Verfahren nach Anspruch 2, bei welchem die Achse über die Ausnehmungen mit 20°-50° angewinkelt ist.

## Revendications

1. Un procédé de réduction de la masse à refaçonner durant le processus de production par estampage de pains de savon ou de détergent, le procédé comprenant la réduction des zones ne présentant pas de cavités, d'un bloc de matriçage (3, 5) classique, en inclinant, sous un angle de 10 à 90°, l'axe principal des cavités par rapport à l'axe principal du bloc de matriçage (3, 5)

2. Un procédé selon la revendication 1, dans lequel l'axe passant par les cavités est incliné d'une valeur de 10°-60°.

3. Un procédé selon la revendication 2, dans lequel l'axe passant par les cavités est incliné d'une valeur de 20-50°.
